(19) Europäisches Patentamt
European Patent Office
Office européen des brevets

(11) **EP 3 324 035 B1**

(12) **FASCICULE DE BREVET EUROPEEN**

(45) Date de publication et mention
de la délivrance du brevet:
**23.12.2020 Bulletin 2020/52**

(51) Int Cl.:
*F02N 11/00* (2006.01)        *H02P 1/46* (2006.01)
*H02P 3/18* (2006.01)        *F02C 7/268* (2006.01)

(21) Numéro de dépôt: **17200489.7**

(22) Date de dépôt: **08.11.2017**

(54) **PROCÉDÉ DE COMMANDE D'UN DÉMARREUR GÉNÉRATEUR**

STEUERVERFAHREN EINES ANLASSER-GENERATORS

METHOD FOR CONTROLLING A STARTER-GENERATOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **22.11.2016 FR 1601650**

(43) Date de publication de la demande:
**23.05.2018 Bulletin 2018/21**

(73) Titulaire: **Thales**
**92400 Courbevoie (FR)**

(72) Inventeurs:
• **DAL, Arnaud**
**78401 CHATOU (FR)**

• **CULAND, Alain**
**78401 CHATOU (FR)**

(74) Mandataire: **Marks & Clerk France**
**Immeuble "Visium"**
**22, avenue Aristide Briand**
**94117 Arcueil Cedex (FR)**

(56) Documents cités:
**EP-A1- 2 280 162        WO-A1-90/06016**
**FR-A1- 2 952 130        JP-A- 2002 202 035**
**US-A1- 2009 302 788**

**Description**

La présente invention se rapporte à un procédé de commande d'un dispositif démarreur-générateur pour moteurs, ou ESG acronyme de l'expression anglo-saxonne Electronic Starter Generator ,et à un dispositif de pilotage associé.

Le domaine d'application est plus particulièrement celui des démarreurs-générateurs pour des moteurs aéronautiques de propulsion. L'invention est toutefois applicable à d'autres types de turbomachines, par exemple les turbomachines industrielles, d'hélicoptères, de groupes auxiliaires de puissance ou APU acronyme de l'expression anglo-saxonne « Auxiliary Power Unit » ou à tout autre type de moteur.

Un dispositif démarreur-générateur comprend un démarreur-générateur qui est une machine électrique réversible.

Un démarreur-générateur est destiné à être couplé mécaniquement à un arbre d'un moteur. Il est apte à fonctionner en mode générateur, pendant une phase dite de génération, lors de laquelle le moteur fournit la puissance motrice au démarreur-générateur. Lors de cette phase, le démarreur-générateur transforme l'énergie mécanique de rotation de l'arbre du moteur en un courant électrique alternatif polyphasé destiné à alimenter un réseau électrique utilisateur. Le démarreur-générateur est également apte à fonctionner en mode démarreur, pendant une phase de démarrage, lors de laquelle il transforme une énergie électrique qui lui est fournie en une puissance motrice destinée à entraîner en rotation l'arbre du moteur de façon à démarrer le moteur.

Ce type de démarreur-générateur comprend classiquement un stator comprenant un enroulement statorique polyphasé et un rotor comprenant enroulement rotorique monophasé ou polyphasé qui sont couplés magnétiquement entre eux. L'enroulement statorique et l'enroulement rotorique sont couplés magnétiquement entre eux. Le rotor et le stator sont par exemple le rotor et le stator d'une machine électrique principale dans le cas d'un démarreur-générateur sans balais. Le démarreur-générateur est destiné à être couplé mécaniquement à l'arbre du moteur par son rotor.

Pour assurer le démarrage du moteur, on alimente classiquement l'enroulement statorique au moyen d'un courant alternatif ce qui produit un champ magnétique tournant dans le stator. On alimente également l'enroulement rotorique de la machine principale en courant continu ce qui génère un champ magnétique dans le rotor du démarreur-générateur. Le rotor et l'arbre sont alors entraînés en rotation et entraînent l'arbre du moteur en rotation ce qui permet de démarrer le moteur. Le démarreur-générateur passe ensuite en mode générateur lorsque le moteur a atteint sa vitesse de ralenti. L'alimentation des enroulements statorique et rotorique est classiquement réalisée au moyen d'un dispositif de régulation démarreur lui-même classiquement alimenté au moyen d'une source d'alimentation via un bus d'alimentation continu. Le moteur est destiné à tourner dans un sens de rotation prédéterminé pendant les phases de démarrage et de génération. Ce sens de rotation est appelé le sens de rotation nominal

Les APU et les moteurs aéronautiques de propulsion peuvent comprendre des ailettes en prise avec l'air environnant. Le vent peut alors entraîner ces moteurs en rotation en sens inverse au sens de rotation nominal.

Un but de l'invention est de proposer un procédé de démarrage du démarreur-générateur lorsque le moteur tourne initialement en sens inverse au sens nominal.

La demande de brevet WO90/06016 A1 divulgue un procédé de commande d'un démarreur générateur dans lequel une étape de démarrage est précédée d'une étape de freinage lors de laquelle l'enroulement statorique est mis en court-circuit.

Un but de l'invention est de proposer un procédé de commande d'un démarreur générateur dans lequel une étape de démarrage est précédée d'une étape de freinage induisant des risques limités de détérioration d'un dispositif de régulation démarreur ou des risques limités d'activer des protections de surtension susceptibles de rendre indisponible le démarreur-générateur.

A cet effet, l'invention a pour objet un procédé de commande d'un démarreur-générateur lors d'une phase de démarrage d'un moteur destiné à être entrainé en rotation dans un sens nominal prédéterminé par le démarreur-générateur, ledit démarreur-générateur comprenant un stator comprenant au moins un enroulement statorique polyphasé et un rotor comprenant au moins un enroulement rotorique couplé magnétiquement à l'enroulement statorique. Le procédé comprend une étape de démarrage du moteur lors de laquelle ledit au moins un enroulement statorique polyphasé et l'enroulement rotorique sont alimentés électriquement de sorte à démarrer le moteur, ladite étape de démarrage étant précédée, lorsque le moteur tourne initialement dans le sens inverse au sens nominal, d'une étape de freinage lors de laquelle un courant est prélevé sur ledit au moins un enroulement statorique polyphasé et l'enroulement rotorique est alimenté électriquement.

Selon l'invention, lors de l'étape de freinage, ledit au moins un enroulement statorique délivre une puissance de distribution Pd sur un bus d'alimentation et une puissance dite d'alimentation Pa est prélevée, sur ledit bus d'alimentation, la puissance d'alimentation Pa étant supérieure ou égale à la puissance de distribution Pd.

Selon l'invention, ladite puissance d'alimentation Pa est supérieure ou égale à la puissance de distribution Pd.

Le procédé comprend avantageusement au moins une des caractéristiques ci-dessous prise seule ou en combinaison :

-    lors de l'étape de freinage, un courant est prélevé sur l'enroulement statorique polyphasé pour alimenter électriquement ledit au moins un enroulement rotorique,

- l'étape de freinage est mise en oeuvre tant que le moteur tourne dans le sens inverse,
- lors de l'étape de freinage, l'enroulement statorique polyphasé délivre une puissance de distribution sur un bus d'alimentation et une puissance d'alimentation Pa est prélevée sur le bus d'alimentation,
- lors de l'étape de freinage, la puissance d'alimentation Pa est utilisée pour alimenter l'enroulement rotorique,
- lors de l'étape de freinage un ensemble d'au moins un onduleur statorique réversible est commandé de sorte à prélever un courant sur ledit au moins un enroulement statorique et délivrer la puissance de distribution Pd sur un bus d'alimentation et un ensemble d'au moins un onduleur rotorique est commandé de sorte à prélever, sur ledit bus d'alimentation, la puissance dite d'alimentation Pa pour alimenter électriquement l'enroulement rotorique.

L'invention se rapporte également à un dispositif démarreur-générateur comprenant un démarreur-générateur comprenant un stator comprenant un enroulement statorique polyphasé et un rotor comprenant au moins un enroulement rotorique couplé magnétiquement à l'enroulement statorique, ledit démarreur/générateur étant apte à fonctionner dans un mode démarreur dans lequel il entraine un moteur en rotation dans un sens nominal prédéterminé, ledit dispositif démarreur-générateur comprenant en outre un dispositif de régulation démarreur apte à commander le démarreur-générateur et configuré, lors d'une phase de démarrage, pour mettre en œuvre une étape de démarrage du moteur lors de laquelle il alimente électriquement l'enroulement statorique polyphasé et l'enroulement rotorique de sorte à démarrer le moteur, ladite étape de démarrage étant précédée, lorsque le moteur tourne initialement dans le sens inverse au sens nominal, d'une étape de freinage lors de laquelle le dispositif de régulation démarreur prélève un courant sur l'enroulement statorique et alimente électriquement l'enroulement rotorique.

Selon l'invention, lors de l'étape de freinage, ledit au moins un enroulement statorique délivre une puissance de distribution Pd sur un bus d'alimentation une puissance dite d'alimentation Pa est prélevée, sur ledit bus d'alimentation, pour alimenter électriquement l'enroulement rotorique.

Selon l'invention, ladite puissance d'alimentation Pa est supérieure ou égale à la puissance de distribution Pd.

Avantageusement, le dispositif de régulation démarreur prélève un courant sur l'enroulement statorique pour alimenter électriquement l'enroulement rotorique.

Avantageusement, le dispositif de régulation démarreur comprend un ensemble d'au moins onduleur statorique réversible permettant d'alimenter un bus d'alimentation à partir d'un courant prélevé sur l'enroulement statorique et un ensemble d'au moins un onduleur rotorique apte à alimenter électriquement l'enroulement rotorique à partir d'une puissance de distribution prélevée sur le bus d'alimentation, ledit dispositif de régulation démarreur comprenant un dispositif de commande apte à commander lesdits ensembles d'onduleurs, ledit dispositif de commande étant configuré pour commander l'ensemble d'au moins un onduleur statorique et l'ensemble d'au moins un onduleur rotorique de sorte que pendant l'étape de freinage l'ensemble d'au moins un onduleur statorique prélève le courant sur l'enroulement statorique et délivre la puissance de distribution Pd sur le bus d'alimentation et de sorte que l'ensemble d'au moins un onduleur rotorique prélève, sur ledit bus d'alimentation, une puissance dite d'alimentation Pa pour alimenter électriquement l'enroulement rotorique.

Avantageusement, ladite puissance d'alimentation Pa est supérieure ou égale à la puissance de distribution Pd.

D'autres caractéristiques et avantages de l'invention apparaîtront à la lecture de la description détaillée qui suit, faite à titre d'exemple non limitatif et en référence aux dessins annexés dans lesquels :

- la figure 1 déjà décrite représente un schéma fonctionnel d'un dispositif démarreur-générateur selon l'invention,
- la figure 2 représente un plan couple C (N.m) - vitesse angulaire $\omega$ en rad.s$^{-1}$ d'un démarreur-générateur d'un dispositif démarreur-générateur selon l'invention,
- La figure 3 représente les étapes du procédé selon l'invention.

D'une figure à l'autre, les mêmes éléments sont repérés par les mêmes références.

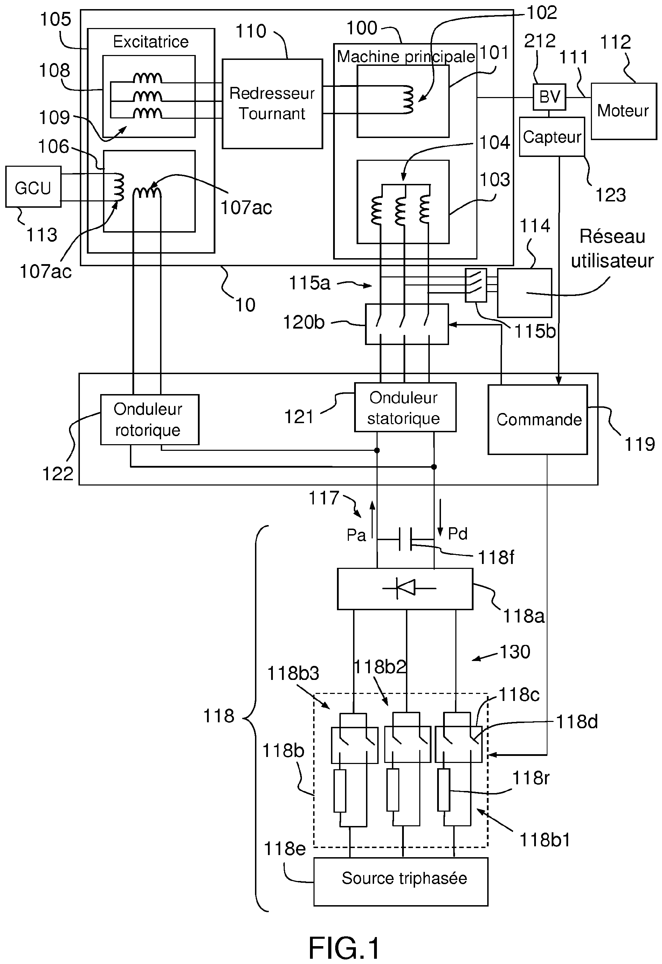

Le dispositif démarreur-générateur 1, selon l'invention est représenté fonctionnellement sur la figure 1. Ce dispositif démarreur-générateur est destiné à démarrer un moteur 112 , pendant une phase de démarrage, et à être entrainé par le moteur et délivrer une tension alternative polyphasée pendant une phase de génération. Le dispositif démarreur-générateur 1 selon l'invention comprend un démarreur-générateur 10. Ce démarreur-générateur 10 est du type machine électrique synchrone sans balais à deux étages sur l'exemple non limitatif de la figure 1. Le démarreur-générateur 1 est avantageusement couplé mécaniquement au moteur 112 via une boite de vitesse BV, 212. Cette machine électrique synchrone 10 comprend une machine principale 100 comprenant un rotor principal 101 et un stator principal 103 couplés magnétiquement entre eux.

Comme visible sur la figure 1, le rotor principal 101 comprend au moins un enroulement rotorique 102 et le stator principal comprend un enroulement statorique polyphasé 104 appelé enroulement statorique 104 dans la suite du texte. L'enroulement statorique polyphasé 104 comprend plusieurs enroulements de phase statoriques qui sont décalés angulairement de sorte à délivrer une tension alternative polyphasée.

Le démarreur-générateur est par exemple, de façon non limitative, un démarreur-générateur synchrone sans balais comme représenté sur la figure 1. Classiquement, les démarreurs-générateurs synchrones sans balais comprennent une excitatrice 105. L'excitatrice comprend un stator d'excitatrice 106 comprenant au moins un enroulement statorique d'excitatrice, ici deux enroulements statoriques 107ac et 107dc, et un rotor d'excitatrice 108 comprenant un enroulement polyphasé 109 relié électriquement à l'enroulement rotorique 102 de la machine principale 100 au moyen d'un pont redresseur tournant 110. Les rotors 101, 108 de la machine principale 300 et de l'excitatrice 105 sont montés sur un arbre commun 111 destiné à être couplé à un moteur 112.

Lorsque le démarreur-générateur 10 fonctionne en mode générateur, un courant continu est injecté dans un premier enroulement statorique de l'excitatrice 107dc. Si le rotor de l'excitatrice 105 tourne, un courant alternatif polyphasé est induit dans le rotor de l'excitatrice 108. Le pont redresseur tournant 110 redresse ce courant et le courant continu IF obtenu est injecté dans l'enroulement rotorique 102 de la machine principale 100. Comme le rotor de la machine principale 108 est entrainé en rotation par le moteur, un courant alternatif polyphasé est induit dans l'enroulement statorique polyphasé 104 de la machine principale 100 et destiné à alimenter un réseau utilisateur 114 via un contacteur de génération 115. Une unité de régulation génération GCU, 113 alimente le premier enroulement statorique de l'excitatrice 107dc pendant la phase de génération. L'unité GCU, 113 règle avantageusement la tension et/ou le courant d'alimentation du premier enroulement 107dc de sorte à réguler la tension alternative fournie par l'enroulement statorique 104.

Lorsque le démarreur-générateur 10 fonctionne en mode démarreur, l'enroulement rotorique 102 et l'enroulement statorique 104 sont alimentés électriquement au moyen d'un dispositif de régulation démarreur 116. L'enroulement rotorique 102 est, par exemple, alimenté par injection d'un courant dans le deuxième enroulement statorique 107ac par le dispositif de régulation démarreur 116. Ce courant alternatif induit, par effet transformateur, un champ électromagnétique dans le rotor 108 de l'excitatrice 105 que l'excitatrice tourne ou non. Le courant alternatif généré par ce champ électromagnétique induit est redressé par le pont redresseur tournant 110 et le courant continu IF ainsi obtenu est injecté dans l'enroulement rotorique 102 de la machine principale 100 ce qui génère un champ magnétique dans le rotor 101 de la machine principale 100. L'enroulement statorique polyphasé 104 de la machine principale 100 est alimenté en courant alternatif polyphasé à fréquence variable. Ce courant produit un champ magnétique tournant dans le stator principal 103. L'interaction entre le champ magnétique créé par l'enroulement du rotor 102 et le champ tournant créé par les enroulements du stator 104 crée un couple électromagnétique moteur. Le rotor principal 101 et l'arbre 111 sont alors entraînés en rotation et entraînent le moteur 112 en rotation. Le démarreur-générateur passe ensuite en mode générateur lorsque le moteur a atteint sa vitesse de ralenti.

Le dispositif de régulation démarreur 116 est alimenté au moyen d'une source d'alimentation 118. La source d'alimentation 118 délivre un courant continu, via un bus d'alimentation continu 117, sur l'exemple non limitatif de la figure 1. La source d'alimentation 118 est, par exemple, un APU ou un groupe générateur au sol. La source d'alimentation peut comprendre une source d'alimentation en courant continu ou une source d'alimentation en courant alternatif et un redresseur. Le dispositif de régulation démarreur 116 est avantageusement apte à réguler les courants et/ou tension d'alimentation des enroulements statorique 104 et rotorique 102. A cet effet, des informations relatives aux valeurs instantanées des courants et/ou tension d'alimentation de ces enroulements sont fournies au dispositif de régulation démarreur 116. Ces valeurs sont avantageusement fournies à un dispositif de commande 119.

Le dispositif de régulation démarreur 116 comprend de façon non limitative un ensemble d'au moins un onduleur dit statorique 121 relié électriquement au bus d'alimentation 117 et à l'enroulement statorique 104. Il permet d'alimenter électriquement l'enroulement statorique 104 au moyen d'un courant prélevé sur un bus d'alimentation 117.

L'unité de régulation démarreur 116 comprend de façon non limitative, un ensemble d'au moins un autre onduleur, dit rotorique, 122 relié électriquement au bus d'alimentation 117 et à l'enroulement rotorique 102. Il permet d'alimenter électriquement l'enroulement rotorique 102 au moyen d'un courant prélevé sur le bus d'alimentation 117.

Sur la réalisation non limitative de la figure 1, chaque ensemble d'au moins un onduleur comprend un unique onduleur 121, 122 mais peut en variante en comprendre plusieurs.

Les onduleurs 121,122 du dispositif de régulation démarreur 116 sont commandés par le dispositif de commande 119.

L'ensemble d'au moins un onduleur statorique 121 est relié à l'enroulement statorique 104 via une ligne d'alimentation 120a comprenant un contacteur de démarrage 120b. Sur la réalisation de la figure 1, le dispositif démarreur-générateur comprend un contacteur de démarrage mais il pourrait en comprendre plusieurs notamment lorsque le dispositif de régulation démarreur comprend plusieurs onduleurs statoriques, par exemple, lorsque le stator principal comprend plusieurs enroulements statoriques polyphasés. Chaque onduleur statorique est alors relié à un enroulement statorique polyphasé au moyen d'une ligne d'alimentation polyphasée comprenant un contacteur de démarrage.

Le contacteur de démarrage 120b peut avantageusement être commandé au moyen du dispositif de commande 119. Le dispositif de commande 119 est avantageusement configuré pour commander le contacteur de démarrage 120b de sorte à fermer la ligne d'alimentation 115a sur réception d'un ordre de démarrage. Cela permet d'alimenter électriquement l'enroulement statorique polyphasé 104 au moyen de l'ensemble d'au moins un onduleur statorique 121 pour faire fonctionner le démarreur-générateur en mode démarreur. Le dispositif de commande 119 est avantageusement configuré pour ouvrir la ligne d'alimentation 120a de sorte à déconnecter l'ensemble d'au moins de l'enroulement statorique 104 sur réception d'un ordre de génération.

L'enroulement statorique polyphasé 104 est relié électriquement à un réseau utilisateur 114 de sorte à alimenter électriquement le réseau utilisateur 114 au moyen du démarreur-générateur 10 lorsque le démarreur-générateur est commandé en mode générateur.

L'enroulement statorique polyphasé 104 est par exemple relié à un réseau utilisateur 114 au moyen d'au moins une ligne d'alimentation 115a comprenant au moins un contacteur de génération. Le contacteur de génération 115b peut avantageusement être commandé au moyen du dispositif de commande 119. Le dispositif de commande 119 est avantageusement configuré pour commander le contacteur de démarrage 120b de sorte à fermer la ligne d'alimentation 115a sur réception d'un ordre de génération. Le dispositif de commande 119 est avantageusement configuré pour ouvrir la ligne d'alimentation 115a de sorte à déconnecter l'ensemble d'au moins un enroulement de phase statorique 104 sur réception d'un ordre de génération.

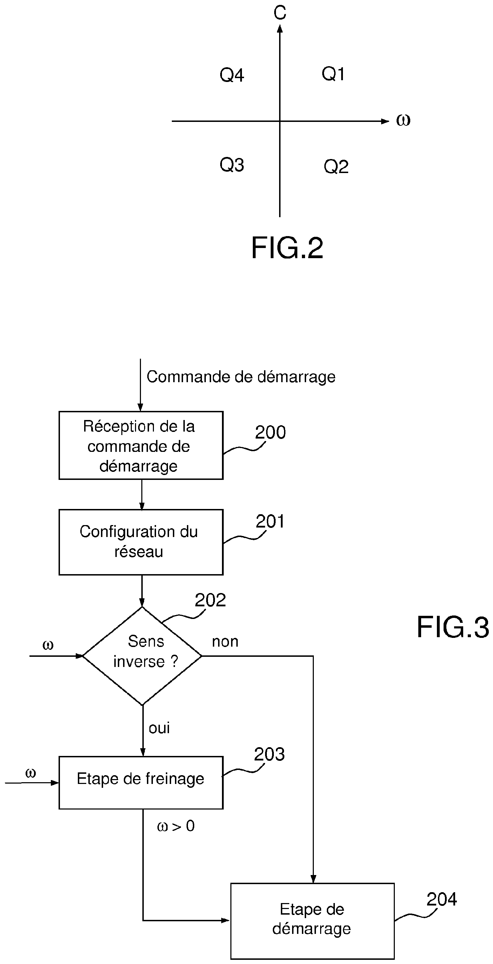

Pour rappel, le plan couple C (N.m)/ vitesse angulaire $\omega$(rad.s$^{-1}$) du dispositif démarreur-générateur est divisé en quatre quadrants Q1, Q2, Q3, Q4 tels que représentés sur la figure 2, dont deux moteurs Q1 et Q3 et deux générateurs Q2 et Q4. Un seul des quadrants moteurs, le premier quadrant Q1, peut être utilisé dans le cadre de cette invention car le moteur 112 est destiné à tourner dans un sens prédéterminé lorsque le démarreur-générateur 10 fonctionne en mode démarreur. Par conséquent, le quadrant moteur opposé au premier quadrant Q1, à savoir le troisième quadrant Q3, est inutilisable pour démarrer ce moteur. De même, un seul des quadrants générateurs, le deuxième quadrant Q2, peut être utilisé dans le cadre de cette invention car le moteur 112 est destiné à tourner dans un sens prédéterminé lorsque le démarreur-générateur 10 fonctionne en mode générateur. Par conséquent, le quadrant générateur Q4 opposé au deuxième quadrant Q2 est inutilisable pour démarrer ce moteur 112.

Lorsque le vent fait tourner le moteur 112 dans le sens inverse au sens nominal, le démarreur-générateur 10 se trouve alors dans le quatrième quadrant Q4 qui est un quadrant de génération. Comme le produit du couple et de la vitesse angulaire est négatif dans ce quatrième quadrant, le démarreur-générateur se trouve dans l'incapacité de fournir un couple moteur et donc à démarrer le moteur 112 dans le sens nominal. Il n'est pas possible de démarrer le moteur 112 directement. Or, comme le moteur 112 fournit un couple moteur, si l'enroulement rotorique 102 est alimenté électriquement, comme le rotor 101 est entrainé en rotation par le moteur 112, un courant alternatif polyphasé est induit dans l'enroulement statorique polyphasé 104 de la machine principale 100. Le dispositif démarreur-générateur 1 peut (seulement) fournir un couple de freinage par absorption d'une puissance délivrée par l'enroulement statorique 104 par le dispositif de régulation démarreur 116.

Avantageusement, lorsque le dispositif de commande 119 reçoit un ordre de démarrage alors que le moteur 112 tourne dans le sens inverse au sens nominal, le dispositif de régulation démarreur 116 est configuré pour ne pas mettre en œuvre directement une étape de démarrage lors de laquelle il commande le démarreur-générateur 10 en mode démarreur, c'est-à-dire lors de laquelle il alimente électriquement les enroulements statorique 104 et rotorique 102 de la machine principale 100.

Avantageusement, le dispositif de régulation démarreur 116 est configuré pour commander le démarreur-générateur 10 en phase de démarrage, par exemple sur réception d'une commande de démarrage, de sorte à mettre en œuvre une étape de freinage 203 avant l'étape de démarrage 204. Lors de l'étape de freinage, le dispositif de régulation démarrage 116 prélève une puissance sur l'enroulement statorique 104 et alimente électriquement l'enroulement rotorique 102. L'étape de freinage 203 permet de freiner le moteur qui tourne en sens inverse.

Lorsque la vitesse du moteur 112 devient nulle, il est possible de démarrer le moteur. L'étape de freinage 203 permet de rendre le moteur 112 plus rapidement disponible pour le démarrage et ainsi de limiter la durée d'indisponibilité d'un équipement, par exemple un aéronef, entrainé par le moteur.

Le dispositif de commande 119 commande les onduleurs de façon coordonnée pendant l'étape de freinage. Plus précisément, le dispositif de commande commande l'onduleur rotorique 122 pour qu'il alimente électriquement l'enroulement rotorique et l'onduleur statorique 121 pour qu'il prélève un courant sur l'enroulement statorique. L'onduleur statorique 121 est par conséquent réversible. Avantageusement, l'onduleur statorique 121 est piloté de façon à contrôler le couple de freinage.

L'étape de freinage peut être mise en œuvre avec un dispositif de régulation démarreur du type de la figure 1 dans lequel les onduleurs sont reliés à un même bus d'alimentation 117, les onduleurs 121, 122 étant aptes à alimenter les enroulements statoriques et rotorique à partir d'un courant prélevé sur le bus d'alimentation 117, ou avec tout autre type de dispositif de régulation démarreur, par exemple un dispositif comprenant deux onduleurs aptes à alimenter électriquement les enroulements statorique et rotorique et à prélever un courant sur l'enroulement statorique et reliés électriquement à des bus d'alimentation différents ou un dispositif comprenant un onduleur rotorique apte à alimenter électriquement l'enroulement rotorique et un convertisseur AC/AC apte à prélever un courant sur l'enroulement statorique, ou du type comprenant un convertisseur AC/DC apte à prélever un courant sur l'enroulement statorique et relié électriquement à un même bus d'alimentation que l'onduleur rotorique et comprenant un autre convertisseur DC/AC ou AC/AC apte à alimenter électriquement l'enroulement statorique 104 et relié à un autre bus d'alimentation que l'onduleur rotorique.

Avantageusement, l'étape de freinage 204 est mise en œuvre tant que le moteur 112 tourne en sens inverse.

Afin de détecter si le moteur tourne en sens inverse, le dispositif de commande 119 utilise avantageusement une information de vitesse angulaire ω du rotor. Cette information de vitesse angulaire du rotor peut être fournie par un capteur de vitesse angulaire 123. En variante, le dispositif démarreur-générateur 1 comprend un capteur permettant de mesurer une position angulaire du rotor et de la fournir au dispositif de commande. Le dispositif de commande comprend des moyens permettant de calculer une vitesse angulaire du rotor à partir de la position angulaire.

Lors de l'étape de freinage 203, l'onduleur statorique 121 délivre une tension sur le bus d'alimentation 117. Autrement dit, lors de l'étape de freinage, l'enroulement statorique polyphasé délivre une puissance de distribution sur un bus d'alimentation.

Plus la puissance absorbée sur l'onduleur statorique est importante et plus le freinage est rapide et l'indisponibilité de l'équipement motorisé au moyen du moteur 112 est de courte durée. Or, si la puissance électrique délivrée par le dispositif de régulation démarreur 1 sur le bus d'alimentation 117 est plus importante que la puissance consommée sur le bus 117, la tension du bus augmente ce qui peut conduire à la détérioration du dispositif de régulation démarreur ou à activer des protections de surtension qui peuvent rendre indisponible le démarreur-générateur tant que le moteur tourne en sens inverse ou plus précisément tant que la tension n'est pas redescendue en dessous du seuil.

La solution apportée consiste, lors de l'étape de freinage, à prélever, sur le bus d'alimentation 117, une puissance d'alimentation Pa. Cela est réalisé afin d'éviter une hausse de tension trop importante du bus d'alimentation 117 due à l'injection de la puissance de distribution Pd sur le bus 117.

Avantageusement, la puissance d'alimentation Pa est supérieure ou égale à la puissance dite de distribution Pd délivrée sur le bus d'alimentation 117 par l'enroulement statorique 104. Cela est réalisé afin d'éviter une hausse de tension du bus d'alimentation 117 due à l'injection de la puissance de distribution Pd sur le bus 117.

La puissance d'alimentation est restituée dans une charge.

Avantageusement, la charge est l'enroulement rotorique 102. Autrement dit, lors de l'étape de freinage, un courant est prélevé sur l'enroulement statorique polyphasé pour alimenter électriquement ledit au moins un enroulement rotorique.

Avantageusement, la puissance Pa est utilisée pour alimenter l'enroulement rotorique.

Avantageusement, l'invention consiste alors à prélever toute la puissance de distribution Pd, délivrée sur le bus d'alimentation 117 par l'enroulement statorique 104, pour alimenter l'enroulement rotorique 102. Tant que la puissance prélevée sur le bus d'alimentation 117 est supérieure à la puissance délivrée par l'enroulement statorique 104 sur le bus d'alimentation 117, il ne pourra pas y avoir d'augmentation de la tension du bus d'alimentation 117 due à l'injection de la puissance Pd sur le bus d'alimentation.

A cet effet, le dispositif de régulation démarreur 116 est configuré de façon à prélever toute la puissance de distribution Pd délivrée sur le bus d'alimentation 117 et à utiliser la puissance prélevée pour alimenter l'enroulement rotorique 102. Autrement dit, la puissance prélevée est injectée dans le démarreur-générateur 10 de façon à alimenter l'enroulement rotorique 102.

A titre d'information, la puissance à fournir à l'enroulement statorique de l'excitatrice pour alimenter l'enroulement rotorique de la machine principale peut atteindre plusieurs kW.

L'invention permet d'éviter les risques de détérioration du dispositif de régulation démarreur 1, plus particulièrement de ses onduleurs, ou le déclenchement de dispositifs de protection en surtension pendant la phase de démarrage. Elle permet également de prélever une puissance plus importante sur l'enroulement statorique 104 sans risquer une surtension sur le bus d'alimentation 117 ce qui permet d'augmenter la rapidité du freinage et de limiter l'indisponibilité de l'équipement motorisé au moyen du moteur 112, c'est-à-dire par exemple de limiter la durée de l'immobilisation d'un aéronef due au vent. L'invention est simple et optimale puisqu'elle utilise une charge (l'enroulement rotorique 102) qui est, de fait, alimentée électriquement pendant l'étape de freinage. L'invention n'utilise pas d'autre charge ce qui permet d'éviter d'avoir à mettre en œuvre un pilotage spécifique à cette autre charge. Elle est particulièrement adaptée à un dispositif démarreur-générateur 1 du type comprenant un onduleur rotorique relié électriquement au même bus d'alimentation que l'onduleur statorique. Elle s'applique également à tout type d'onduleur comprenant un convertisseur apte à prélever un courant sur l'enroulement statorique 104 et à délivrer ce courant sur un bus d'alimentation 117 relié à l'onduleur rotorique 122 de sorte que l'onduleur rotorique puisse alimenter l'enroulement rotorique 102.

Une fois le moteur 112 suffisamment freiné pour repasser à une vitesse nulle puis positive, il n'est plus nécessaire de limiter la puissance fournie, cette fois-ci, à l'enroulement statorique 104 de la machine principale 100 par rapport à la puissance fournie à l'enroulement statorique 107ac de l'excitatrice 102 pour alimenter l'enroulement rotorique 102 de la machine principale.

Dans le mode de réalisation de la figure 1, le dispositif de commande 119 est configuré de façon à commander l'onduleur statorique 121 pour prélever un courant sur l'enroulement statorique 104 et à délivrer une puissance de distribution Pd sur le bus 117 et de façon à commander l'onduleur rotorique 122 de façon qu'il prélève, sur le bus d'alimentation 117, une puissance d'alimentation Pa, supérieure ou égale à la puissance de distribution Pd, pour alimenter l'enroulement rotorique 102. Autrement dit, l'onduleur rotorique 122 comprend une entrée reliée au bus d'alimentation 117 et une sortie reliée au démarreur-générateur 10 pour permettre d'alimenter électriquement l'enroulement rotorique 102. Cet onduleur 22 transforme la puissance électrique d'alimentation Pa qu'il prélève sur le bus 117 en une puissance injectée dans le démarreur-générateur 10 de sorte à alimenter électriquement l'enroulement rotorique 102. Sur l'exemple de la figure 6, l'onduleur rotorique 122 alimente l'enroulement rotorique 102 via l'excitatrice 105.

Autrement dit, la puissance d'alimentation Pa prélevée sur le bus d'alimentation 117 est transformée par l'onduleur rotorique 122 en une puissance électrique délivrée par l'onduleur rotorique 122 et prélevée par le démarreur-générateur 10 pour alimenter l'enroulement rotorique 102.

Dans une variante moins optimale, la charge comprend l'enroulement rotorique 102 et une autre charge.

Afin de commander les onduleurs 121, 122 pour que la puissance d'alimentation Pa soit supérieure à la puissance délivrée Pd, le dispositif démarreur-générateur 10 comprend par exemple une mémoire comprenant une table de courants comprenant par exemple la valeur du courant d'alimentation de l'enroulement statorique 104 à ne pas dépasser en fonction du courant rotorique qui est par exemple le courant délivré par l'onduleur rotorique pour alimenter le rotor.

Lors de l'étape de freinage 203, le dispositif de commande 119 génère ou reçoit une consigne de couple, reçoit ou génère une consigne de courant rotorique devant être délivré par l'onduleur rotorique 122 et reçoit les informations de position et/ou de vitesse du rotor 101. Il commande les onduleurs 121, 122 en courant afin d'asservir le couple délivré par le démarreur-générateur 10 sur la consigne de couple en fonction des informations de position et/ou de vitesse du rotor tout en respectant la consigne de courant rotorique et en limitant le courant statorique délivré par l'enroulement statorique 104 à la valeur maximale fournie par la table de courant en fonction de la consigne de courant rotorique.

La consigne de courant rotorique peut être fixe pendant l'étape de freinage, il s'agit par exemple du courant rotorique maximal que le courant rotorique ne doit pas dépasser pendant l'étape de freinage. En variante, la consigne de courant est variable pendant l'étape de freinage.

La table de courant est par exemple obtenue de la manière suivante mais elle pourrait être obtenue par des méthodes plus précises. La puissance P délivrée par l'onduleur rotorique est:

$$P = R*Ir^2$$

Où R est l'impédance de la machine alimentée par l'onduleur rotorique et ramenée à l'entrée de l'onduleur rotorique 122, et Ir est le courant en sortie de l'onduleur rotorique 122 ou une estimation du courant dans l'enroulement rotorique de la machine électrique principale qui peut être obtenue à partir du courant délivré par le courant rotorique en sortie de l'onduleur rotorique.

La puissance d'alimentation Pa prélevée sur le bus d'alimentation est alors :

$$Pa = P/Rr$$

Où Rr est le rendement de l'onduleur rotorique.

La puissance Pd délivrée sur le bus 117 par l'enroulement rotorique est :

$$Pd = (C\omega / Rs*Rm)$$

Où C est le couple délivré par le démarreur-générateur en N.m
$\omega$ est la vitesse de rotation ou vitesse angulaire de l'arbre en rad.s$^{-1}$
Rs est le rendement de l'onduleur statorique
Rm est le rendement du démarreur-générateur
En calculant la puissance délivrée pour la vitesse prédéterminée, on obtient en approximation du premier ordre :

$$Pd = K*Is*Ir/(Rr*Rs)$$

Où K est une constante connue et Is le courant délivré par l'onduleur statorique 121.

La puissance délivrée sur le bus Pd devant être inférieure ou égale à la puissance d'alimentation Pa absorbée sur le bus, la puissance délivrée maximale Pdmax est donnée par :

$$Pdmax = K*Ir*Ismax/(Rr*Rs)=RIr^2/Rr$$

Où Ismax est le courant statorique maximal acceptable lors de l'étape de freinage en fonction du courant rotorique Ir :

$$Ismax = R*Ir*Rs / K$$

L'invention se rapporte également à un procédé de commande d'un démarreur générateur 10 tel que décrit précédemment pendant une phase de démarrage. Les étapes du procédé sont représentées sur la figure 3.

La phase de démarrage débute avantageusement après réception 200, par le dispositif de commande, d'une commande de démarrage.

Après réception 200 de la commande de démarrage, le procédé comprend avantageusement mais non nécessairement une étape 201 de configuration du réseau électrique comprenant une étape de fermeture du contacteur de démarrage 120b et une étape d'ouverture du contacteur de génération 115b. Sur l'exemple non limitatif de la figure 6, la source d'alimentation 118 permettant de délivrer un courant continu comprend une source d'alimentation triphasée 118e permettant de délivrer un courant triphasé reliée à un redresseur 118a permettant de redresser le courant délivré par la source 118e et à délivrer un courant continu injecté dans l'onduleur statorique 121 via un condensateur 118f permettant de lisser la tension en sortie du redresseur 118a. Le redresseur 118a est relié à la source triphasée 118e par une ligne d'alimentation triphasée 130 comprenant un dispositif ou circuit interrupteur de démarrage 118b. Ce dispositif comprend trois dispositifs ou circuits interrupteurs de démarrage individuels 118b1, 118b2, 118b3 intégrés dans les lignes respectives de la ligne d'alimentation triphasée 130. Ces dispositifs individuels 118b1, 118b2, 118b3 peuvent être identiques comme sur la figure 1. Chaque dispositif individuel comprend deux branches en parallèle dont une comprenant un premier interrupteur 118c et une autre comprend un deuxième interrupteur 118d en série avec une résistance 118r. Avantageusement le dispositif de commande 119 est configuré pour piloter les interrupteurs 118c, 118d de façon à fermer la ligne d'alimentation 118e en phase de démarrage, par exemple pendant l'étape de configuration du réseau 201. Le deuxième interrupteur 118d est fermé avant le premier interrupteur 118c afin de limiter les appels de courants. Le redresseur 118a est par exemple un pont de diodes ou un Auto-Transformer Rectifier Units ou ATRU, acronyme de l'expression anglo-saxonne « Auto Transformer Rectifier Unit ».

Le procédé comprend une étape de vérification 202, avantageusement réalisée par le dispositif de commande 119, consistant à vérifier si le moteur 112 tourne dans un sens inverse. Cela est par exemple réalisé à partir d'informations de position et/ou de vitesses du rotor du démarreur-générateur ou du moteur reçues par le dispositif de commande 119 et délivrées par un capteur 123 de vitesse et/ou de position.

Le procédé selon l'invention comprend une étape de démarrage 204 du moteur lors de laquelle ledit au moins un enroulement statorique polyphasé 104 et l'enroulement rotorique 102 sont alimentés électriquement de sorte à démarrer le moteur 112, ladite étape de démarrage étant précédée, lorsque le moteur 112 tourne initialement dans le sens inverse au sens nominal, d'une étape de freinage 203 lors de laquelle un courant est prélevé sur ledit au moins un enroulement statorique polyphasé 104.

Avantageusement, lorsque le moteur 112 ne tourne pas initialement en sens inverse, le procédé ne comprend pas l'étape de freinage 203.

L'étape de freinage 203 est avantageusement mise en œuvre tant que le moteur 112 tourne en sens inverse.

L'étape de freinage 203 n'est pas nécessairement mise en œuvre tant que le moteur 112 tourne en sens inverse. Elle peut, par exemple, être mise en œuvre jusqu'à ce que la vitesse, du moteur tournant en sens inverse, atteigne un seuil prédéterminé.

Le moteur peut être une turbomachine ou tout autre type de moteur.

Chaque rotor ou stator mentionné dans la présente demande de brevet comprend classiquement une armature non référencée sur laquelle est enroulé le ou les enroulements du rotor ou stator. La structure est en matériau ferromagnétique massif ou feuilleté formant un aimant permanent. Les enroulements sont réalisés en matériau électriquement conducteur, par exemple en métal, par exemple en cuivre.

Sur l'exemple représenté sur la figure 1, le stator 106 de l'excitatrice 105 comprend deux enroulements statoriques 107ac et 107dc dont un alimenté électriquement pendant la phase de démarrage et l'autre pendant la phase de génération.

. En variante, le stator 106 de l'excitatrice 105 comprend un seul enroulement statorique. Cet enroulement est alors alimenté en courant continu pendant la phase de génération, par exemple au moyen du GCU, et en courant alternatif pendant la phase de démarrage, au moyen du dispositif de régulation démarreur 116.

Sur l'exemple représenté sur la figure 1, le démarreur-générateur selon l'invention est à deux étages (excitatrice et machine principale). En variante, le démarreur-générateur selon l'invention est à trois étages.

Sur la réalisation non limitative des figures, le démarreur-générateur est du type sans balais. En variante, le démarreur-générateur comprend des balais. Il comprend par exemple un collecteur tournant pour créer une connexion électrique entre l'enroulement rotorique et l'onduleur rotorique.

Le dispositif de commande 119 peut comprendre un ou plusieurs circuits électroniques dédiés ou un circuit à usage général. Chaque circuit électronique peut comprendre une machine de calcul reprogrammable (un processeur ou un micro contrôleur par exemple) et/ ou un calculateur exécutant un programme comprenant une séquence d'instructions et/ou une machine de calcul dédiée (par exemple un ensemble de portes logiques comme un FPGA un DSP ou un ASIC, ou tout autre module matériel). Le démarreur-générateur peut également comprendre au moins une alimentation pour alimenter la commande.

## Revendications

1. Procédé de commande d'un démarreur-générateur (10) lors d'une phase de démarrage d'un moteur (112) destiné à être entrainé en rotation dans un sens nominal prédéterminé par le démarreur-générateur (10), ledit démarreur-générateur (10) comprenant un stator (103) comprenant au moins un enroulement statorique polyphasé (104) et un rotor (101) comprenant au moins un enroulement rotorique (102) couplé magnétiquement à l'enroulement statorique (104), le procédé de commande comprenant une étape de démarrage (204) du moteur (112) lors de laquelle ledit au moins un enroulement statorique polyphasé (104) et le dit au moins un enroulement rotorique (102) sont alimentés électriquement de sorte à démarrer le moteur (112), **caractérisé en ce que** ladite étape de démarrage (204) est précédée, lorsque le moteur (112) tourne initialement dans le sens inverse au sens nominal, d'une étape de freinage (203) lors de laquelle un courant est prélevé sur ledit au moins un enroulement statorique polyphasé (104) et lors de laquelle ledit au moins un enroulement rotorique (102) est alimenté électriquement, l'enroulement statorique polyphasé (104) délivrant une puissance dite de distribution (Pd) sur un bus d'alimentation (117) et une puissance dite d'alimentation étant prélevée sur le bus d'alimentation (117), la puissance d'alimentation (Pa) étant supérieure ou égale à la puissance de distribution (Pd).

2. Procédé de commande selon la revendication précédente, dans lequel lors de l'étape de freinage, la puissance d'alimentation est utilisée pour alimenter électriquement ledit au moins un enroulement rotorique (102).

3. Procédé de commande selon la revendication précédente dans lequel, lors de l'étape de freinage (203), un ensemble d'au moins un onduleur statorique réversible (121) est commandé de sorte à prélever un courant sur ledit au moins un enroulement statorique (104) et délivrer une puissance de distribution (Pd) sur un bus d'alimentation (117) et un ensemble d'au moins un onduleur rotorique (122) est commandé de sorte à prélever, sur ledit bus d'alimentation (117), une puissance dite d'alimentation (Pa) pour alimenter électriquement ledit au moins un enroulement rotorique (102).

4. Procédé de commande selon l'une quelconque des revendications précédentes, dans lequel l'étape de freinage (203) est mise en oeuvre tant que le moteur (112) tourne dans le sens inverse.

5. Dispositif démarreur-générateur (1) comprenant un démarreur-générateur (10) comprenant un stator (103) comprenant un enroulement statorique polyphasé (104) et un rotor (101) comprenant au moins un enroulement rotorique (102) couplé magnétiquement à l'enroulement statorique (104), ledit démarreur/générateur (10) étant apte à fonctionner dans un mode démarreur dans lequel il entraine un moteur (112) en rotation dans un sens nominal prédéterminé, ledit dispositif démarreur-générateur comprenant en outre un dispositif de régulation démarreur (116) apte à commander le démarreur-générateur (10) et configuré, lors d'une phase de démarrage, pour mettre en oeuvre une étape de démarrage (204) du moteur lors de laquelle il alimente électriquement l'enroulement statorique polyphasé (104) et l'enroulement rotorique (102) de sorte à démarrer le moteur (112), **caractérisé en ce que** ladite étape de démarrage (204) étant précédée, lorsque le moteur (112) tourne initialement dans le sens inverse au sens nominal, d'une étape de freinage (203) lors de laquelle le dispositif de régulation démarreur (116) prélève un courant sur l'enroulement statorique (104) et alimente électriquement l'enroulement rotorique (102), l'enroulement statorique polyphasé (104) délivrant une puissance de distribution (Pd) sur un bus d'alimentation (117) et une puissance d'alimentation étant prélevée sur le bus d'alimentation (117), la puissance d'alimentation (Pa) étant supérieure ou égale à la puissance de distribution (Pd).

6. Dispositif selon la revendication précédente, dans lequel lors de l'étape de freinage, la puissance d'alimentation est utilisée pour alimenter électriquement ledit au moins un enroulement rotorique (102).

7. Dispositif démarreur-générateur (1) selon la revendication précédente, dans lequel le dispositif de régulation démarreur (116) comprend un ensemble d'au moins onduleur statorique (121) réversible permettant d'alimenter un bus d'alimentation (117) à partir d'un courant prélevé sur l'enroulement statorique (104) et un ensemble d'au moins un onduleur rotorique (122) apte à alimenter électriquement l'enroulement rotorique (102) à partir d'une puissance de distribution prélevée sur le bus d'alimentation (117), ledit dispositif de régulation démarreur (116) comprenant un dispositif de commande (119) apte à commander lesdits ensembles d'onduleurs, ledit dispositif de commande (119) étant configuré pour commander l'ensemble d'au moins un onduleur statorique (121) et l'ensemble d'au moins un onduleur rotorique (122) de sorte que pendant l'étape de freinage l'ensemble d'au moins un onduleur statorique (121) prélève le courant sur l'enroulement statorique (104) et délivre la puissance de distribution Pd sur le bus d'alimentation (117) et de sorte que l'ensemble d'au moins un onduleur rotorique (122) prélève, sur ledit bus d'alimentation (117), une puissance dite d'alimentation Pa pour alimenter électriquement l'enroulement rotorique (102).

**Patentansprüche**

1. Verfahren zum Steuern eines Starter-Generators (10) während einer Startphase eines Motors (112), der von dem Starter-Generator (10) in einer vorbestimmten Nennrichtung in Drehung versetzt werden soll, wobei der Starter-Generator (10) einen Stator (103) umfasst, der mindestens eine mehrphasige Statorwicklung (104) und einen Rotor (101) umfasst, der mindestens eine Rotorwicklung (102) umfasst, die magnetisch mit der Statorwicklung (104) gekoppelt ist, wobei das Steuerverfahren einen Schritt (204) des Startens des Motors (112) umfasst, in dem die mindestens eine mehrphasige Statorwicklung (104) und die mindestens eine Rotorwicklung (102) mit Strom versorgt werden, um den Motor (112) zu starten, **dadurch gekennzeichnet, dass** dem Startschritt (204), wenn sich der Motor (112) anfänglich entgegengesetzt zur Nennrichtung dreht, ein Bremsschritt (203) vorausgeht, bei dem von der mindestens einen mehrphasigen Statorwicklung (104) ein Strom gezogen wird und bei dem die mindestens eine Rotorwicklung (102) mit Strom versorgt wird, die mehrphasige Statorwicklung (104) eine sogenannte Verteilungsleistung (Pd) an eine Versorgungsschiene (117) liefert und eine sogenannte Versorgungsleistung der Versorgungsschiene (117) entnommen wird, wobei die Versorgungsleistung (Pa) größer als oder genauso groß wie die Verteilungsleistung (Pd) ist.

2. Steuerverfahren nach dem vorhergehenden Anspruch, wobei während des Bremsschrittes die Versorgungsleistung zum Versorgen der mindestens einen Rotorwicklung (102) mit Strom verwendet wird.

3. Steuerverfahren nach dem vorhergehenden Anspruch, wobei während des Brems schrittes (203) eine Baugruppe aus mindestens einem reversiblen Statorwechselrichter (121) so gesteuert wird, dass sie der mindestens einen Statorwicklung (104) Strom entnimmt und eine Verteilungsleistung (Pd) einer Versorgungsschiene (117) zuführt, und eine Baugruppe aus mindestens einem Rotorwechselrichter (122) so gesteuert wird, dass sie der Versorgungsschiene (117) eine sogenannte Versorgungsleistung (Pa) zum Versorgen der mindestens einen Rotorwicklung (102) mit Strom entnimmt.

4. Steuerverfahren nach einem der vorhergehenden Ansprüche, wobei der Bremsschritt (203) ausgeführt wird, solange der Motor (112) in umgekehrter Richtung dreht.

5. Starter-Generator-Vorrichtung (1), die einen Starter-Generator (10) umfasst, der einen Stator (103) umfasst, der eine mehrphasige Statorwicklung (104) und einen Rotor (101) umfasst, der mindestens eine Rotorwicklung (102) umfasst, die magnetisch mit der Statorwicklung (104) gekoppelt ist, wobei der Starter/Generator (10) in einem Startermodus funktionsfähig ist, in dem er einen Motor (112) in einer vorbestimmten Nenndrehrichtung antreibt, wobei die Starter-Generator-Vorrichtung ferner eine Starterreguliervorrichtung (116) umfasst, die den Starter-Generator (10) steuern kann, und so konfiguriert ist, dass sie während einer Startphase einen Startschritt (204) des Motors durchführt, während der sie die mehrphasige Statorwicklung (104) und die Rotorwicklung (102) mit Strom speist, um den Motor (112) zu starten, **dadurch gekennzeichnet, dass** dem Startschritt (204), wenn sich der Motor (112) anfänglich entgegengesetzt zur Nennrichtung dreht, ein Bremsschritt (203) vorausgeht, bei dem die Starterreguliervorrichtung (116) einen Strom aus der Statorwicklung (104) zieht und die Rotorwicklung (102) mit Strom versorgt, wobei die mehrphasige Statorwicklung (104) einer Versorgungsschiene (117) eine Verteilungsleistung (Pd) zuführt und der Versorgungsschiene (117) eine Versorgungsleistung entnommen wird, wobei die Versorgungsleistung (Pa) größer als oder genauso groß wie die Verteilungsleistung (Pd) ist.

6. Vorrichtung nach dem vorhergehenden Anspruch, wobei während des Bremsschrittes die Versorgungsleistung zum Versorgen der mindestens einen Rotorwicklung (102) mit Strom verwendet wird.

7. Starter-Generator-Vorrichtung (1) nach dem vorhergehenden Anspruch, wobei die Starterreguliervorrichtung (116) eine Baugruppe aus mindestens einem reversiblen Statorwechselrichter (121), der die Versorgung einer Versorgungsschiene (117) mit einem der Statorwicklung (104) entnommenen Strom ermöglicht, und eine Baugruppe aus mindestens einem Rotorwechselrichter (122) umfasst, der die Rotorwicklung (102) mit einer der Versorgungsschiene (117) entnommenen Verteilungsleistung versorgen kann, wobei die Starterreguliervorrichtung (116) eine Steuervorrichtung (119) umfasst, die die Wechselrichterbaugruppen steuern kann, wobei die Steuervorrichtung (119) so konfiguriert ist, dass sie die Baugruppe von mindestens einem Statorwechselrichter (121) und die Baugruppe von mindestens einem Rotorwechselrichter (122) so steuert, dass während des Bremsschrittes die Baugruppe von mindestens einem Statorwechselrichter (121) der Statorwicklung (104) den Strom entnimmt und die Verteilungsleistung Pd der Versorgungsschiene (117) zuführt, und zwar so, dass die Baugruppe aus mindestens einem Rotorwechselrichter (122) der Versorgungsschiene (117) eine sogenannte Versorgungsleistung Pa zum Versorgen der Rotorwicklung (102) mit Strom entnimmt.

## Claims

1. Method for controlling a starter-generator (10) during a startup phase of a motor (112) intended to be driven in rotation in a predetermined nominal direction by the starter-generator (10), said starter-generator (10) comprising a stator (103) comprising at least one polyphase stator winding (104) and a rotor (101) comprising at least one rotor winding (102) coupled magnetically to the stator winding (104), the control method comprising a step (204) of starting up (204) the motor (112), during which said at least one polyphase stator winding (104) and said at least one rotor winding (102) are supplied with electric power so as to start up the motor (112), **characterized in that** said startup step (204) is preceded, when the motor (112) is initially rotating in the direction opposite to the nominal direction, by a braking step (203), during which a current is drawn from said at least one polyphase stator winding (104) and during which said at least one rotor winding (102) is supplied with electric power, the polyphase stator winding (104) delivers a so-called distribution power (Pd) to a supply bus (117) and a so-called supply power is drawn from the supply bus (117), wherein the supply power (Pa) is greater than or equal to the distribution power (Pd).

2. Control method according to the preceding claim, wherein, during the braking step, the supply power is used to supply said at least one rotor winding (102) with electric power.

3. Control method according to the preceding claim, wherein, during the braking step (203), an assembly of at least one reversible stator inverter (121) is controlled so as to draw a current from said at least one stator winding (104) and deliver a distribution power (Pd) to a supply bus (117), and an assembly of at least one rotor inverter (122) is controlled so as to draw, from said supply bus (117), a so-called supply power (Pa) in order to supply said at least one rotor winding (102) with electric power.

4. Control method according to either one of the preceding claims, wherein the braking step (203) is implemented as long as the motor (112) is rotating in the reverse direction.

5. Starter-generator device (1) comprising a starter-generator (10) comprising a stator (103) comprising a polyphase stator winding (104) and a rotor (101) comprising at least one rotor winding (102) coupled magnetically to the stator winding (104), said starter/generator (10) being able to operate in a starter mode, in which it drives a motor (112) in rotation in a predetermined nominal direction, said starter-generator device furthermore comprising a starter regulation device (116) able to control the starter-generator (10) and configured, during a startup phase, to implement a step (204) of starting up the motor, during which it supplies the polyphase stator winding (104) and the rotor winding (102) with electric power so as to start up the motor (112), **characterized in that** said startup step (204) is preceded, when the motor (112) is initially rotating in the direction opposite to the nominal direction, by a braking step (203), during which the starter regulation device (116) draws a current from the stator winding (104) and supplies the rotor winding (102) with electric power, the polyphase stator winding (104) supplies a distribution power (Pd) to a supply bus (117) and a supply power is drawn from the supply bus (117), wherein the supply power (Pa) is greater than or equal to the distribution power (Pd).

6. Device according to the preceding claim, wherein, during the braking step, the power supply is used to supply said at least one rotor winding (102) with electric power.

7. Starter-generator device (1) according to the preceding claim, wherein the starter regulation device (116) comprises an assembly of at least one reversible stator inverter (121) that makes it possible to supply a supply bus (117) from a current drawn from the stator winding (104), and an assembly of at least one rotor inverter (122) able to supply the rotor winding (102) with electric power from a distribution power drawn from the supply bus (117), said starter regulation device (116) comprising a control device (119) able to control said inverter assemblies, said control device (119) being configured to control the assembly of at least one stator inverter (121) and the assembly of at least one rotor inverter (122) such that, during the braking step, the assembly of at least one stator inverter (121) draws the current from the stator winding (104) and delivers the distribution power Pd to the supply bus (117), and such that the assembly of at least one rotor inverter (122) draws, from said supply bus (117), a so-called supply power Pa in order to supply the rotor winding (102) with electric power.

FIG.1

C

Q4          Q1

ω

Q3          Q2

## FIG.2

Commande de démarrage

Réception de la
commande de
démarrage                    200

Configuration du
réseau                       201

202

ω          Sens
inverse ?          non

oui

ω          Etape de freinage          203

ω > 0

Etape de
démarrage                    204

## FIG.3

# EP 3 324 035 B1

## RÉFÉRENCES CITÉES DANS LA DESCRIPTION

### Documents brevets cités dans la description

- WO 9006016 A1